# EUROPÄISCHE PATENTSCHRIFT

(11) **EP 2 845 752 B1**
(45) Veröffentlichungstag und Bekanntmachung des Hinweises auf die Patenterteilung: **27.06.2018**
(21) Anmeldenummer: 14002843.2
(22) Anmeldetag: 14.08.2014
(51) Int. Cl.: B60D 1/06, B60D 1/167, B60D 1/173, B60S 9/16, B60D 1/30, B60D 1/66, B62D 63/06

(54) **EINACHSIGER ANHÄNGER FÜR EINEN PERSONENKRAFTWAGEN**
SINGLE-AXLE TRAILER FOR A PASSENGER VEHICLE
REMORQUE À UN SEUL ESSIEU POUR UNE VOITURE PARTICULIÈRE

(30) Priorität: 29.08.2013 DE 202013007656 U
(43) Veröffentlichungstag der Anmeldung: 11.03.2015
(73) Patentinhaber: Laumann, Wilfried, 9320 Arbon (CH)
(72) Erfinder: Laumann, Wilfried, 9320 Arbon (CH)
(74) Vertreter: Weeg, Thomas

(56) Entgegenhaltungen:
- WO-A2-2012/072224
- CA-A1- 2 267 140
- GB-A- 1 426 336
- US-B1- 7 654 609

## Beschreibung

Die Erfindung betrifft einen einachsigen Anhänger für einen Personenkraftwagen o. dgl. Zugfahrzeug gemäß dem Oberbegriff des Anspruchs 1. Derartige einachsige Anhänger sind insbesondere als Ladeplattform, Zeltanhänger, Wohnmobil o. dgl. Transporter von Campingzubehör vorgesehen. Das Dokument CA 2 2267 140 A1 offenbart einen gattungsgemäßen Anhänger. Einachsige Anhänger sind seit langem bekannt, wobei gemäß GB 537,092 (1940) im Bereich einer Anhängevorrichtung jeweilige in Fahrtrichtung parallele Stützträger vorgesehen sind, so dass durch jeweilige an diese angreifende Stellelemente ein seitlicher Versatz des Anhängers beim Fahren ausgleichbar ist. Ein Wohnwagen gemäß DE 22 62 194 (1972), der an einen Personenkraftwagen mittels einer Anhängekupplung ankoppelbar ist, weist eine V-förmige Deichsel auf, die durch zusätzliche zu deren Schenkel parallele Blattfedern so erfasst wird, dass das Führungsverhalten für den Anhänger verbessert ist. Eine Verbesserung bei Kurvenfahrten des Anhängers wird gemäß US 3,787,068 (1974) dadurch erreicht, dass die Anhängekupplung zwei Gelenkarme mit jeweiliger Kugelkopfkupplung aufweist. Bei einer Anhängekupplung gemäß DE 27 21 914 wird zur Stabilisierung einer Teleskop-Verbindungsdeichsel eine zusätzliche Abstützung mittels jeweiliger nach Art von Pleuelstangen zusammenwirkender Verbindungselemente erreicht. Bei einer Anhängekupplung gemäß US 4,076,264 (1978) wird der Fahrzeugrahmen mit zumindest zwei parallelen Kugelkopf-Kupplungen versehen, so dass die entsprechenden Gegenglieder am Anhänger direkt mit dem Fahrzeugrahmen verbunden sind. Bei einem Einachsanhänger gemäß EP 0 054 882 B1 (1981) sind zwei Lenker vorgesehen, die zwischen jeweiligen am Fahrzeugrahmen und am Rahmen des Anhängers vorgesehenen Kugelkupplungen wirken. Eine ähnliche Kupplungsverbindung für einen Einachsanhänger ist in EP 0 132 702 B1 (1984) gezeigt. Aus US 4,664,403 (1987) ist eine Anhängevorrichtung zu entnehmen, bei der zwei symmetrisch zur Längsmittelebene des Anhängers vorgesehene Kugelkupplungen den Anhänger erfassen und von diesen Kugelkupplungen aus eine Stützkonstruktion an den Fahrzeugrahmen und eine zweite Stützkonstruktion an die Stoßstange des Fahrzeugs geführt sind.

Bei einer gemäß WO 95/04668 (1995) gezeigten Konstruktion wird die V-förmige Zugdeichsel durch zwei parallele Führungsstangen einer Zusatzstützvorrichtung unterstützt. In WO 00/56588 (2000) ist zur Unterstützung der Zugdeichsel eine seitliche Lenkkonstruktion vorgesehen, in DE 100 54 762 C2 (2000) wirkt die Anhängerdeichsel mit einer Gestängebaugruppe zusammen, die ein Bremssystem aktiviert, und bei einer Kupplungsvorrichtung gemäß EP 1 022 165 B1 wird die Deichsel mit einer Trapez-Konstruktion versehen, um den Anhänger spurgenau zu steuern. In DE 600 07 182 T2 (2006) wird eine Anhängedeichsel vorgeschlagen, die zur Spurkorrektur ebenfalls mit einer ein Basisteil und zwei Seitenteile aufweisenden Trapez-Konstruktion als Zusatzbaugruppe versehen ist. In EP 1 837 209 A1 (2007) ist ein Kupplungssystem für einen Ackerschlepper gezeigt, wobei ebenfalls mehrere Kugelköpfe als gemeinsame Stützteile vorgesehen sind. Auch bei einer Niederhaltevorrichtung gemäß EP 1 995 085 A1 (2008) wird eine zentrale Kupplungskugel mit zwei eine Zwangslenkung bewirkenden zusätzlichen Kupplungsteilen kombiniert. In US 4,106,794 (1978) ist eine an den Kraftwagen ansteckbare Kupplungsvorrichtung gezeigt, die zur Aufnahme eines Wohnanhängers jeweilige an dieser vorgesehene Deichselstreben erfassende Kugelkupplungsteile aufweist. Eine ähnliche, gattungsbildende Konstruktion ist in DE 69 10 947 (1969) für einen einrädrigen Anhänger vorgeschlagen, wobei mehrere Kupplungsstellen im Bereich eines Zwischengliedes vorgesehen sind.

Eine Weiterentwicklung derartiger einachsiger Anhänger ist in DE 20 2010 016 076.6 und DE 20 2011 104 769.9 gezeigt, wobei eine zusätzlich zur Standard-Kupplung vorgesehene Verbindungsvorrichtung eine optimale Führung bewirkt. Auch in FR 2 948 079 wird ein System mit zwei zusätzlichen Stützpunkten an einem einachsigen Anhänger vorgeschlagen, der in ähnlicher Ausführung auch in US 5,397,148 vorgesehen ist.

Bei einer Zugvorrichtung gemäß DE 10 2011 110 178 A wird der Anhänger zusätzlich im Bereich der Anhängerkupplung mit einer Arretiervorrichtung versehen, die ein verstellbares Seilsystem aufweist.

Bei einem Anhänger gemäß US 2009/0194968 A1 ist der die Nutzlast aufnehmende Rahmen als eine kippbare Konstruktion ausgeführt und das Fahrgespann gemäß DE 10 2004 057 116 A1 weist im Bereich der Kupplung eine zusätzliche Dämpfungseinrichtung auf, um Wankbewegungen des Anhängers auszugleichen.

Die Erfindung befasst sich mit dem Problem, einen an einem Personenkraftwagen o. dgl. Zugfahrzeugen mittels einer mehrgliedrigen Führungs-Verbindung festlegbaren Anhänger so zu gestalten, dass mit geringem technischem Aufwand zumindest bei einer Rückwärtsfahrt eine Verbesserung des Fahrverhaltens und des Bedienkomforts möglich ist und Nickbewegungen optimal ausgleichbar sind.

Die Erfindung löst diese Aufgabe mit einem ein Fahrgestell gemäß dem Anspruch 1 aufweisenden Anhänger. Weitere vorteilhafte Ausgestaltungen des Anhängers ergeben sich aus den Ansprüchen 2 bis 14.

Der im Bereich einer Kugelkopfkupplung ein Zwischenglied aufweisende einachsige Anhänger ist im Bereich seines das Fahrgestell bildenden Basis-Rahmens mit einer zusätzlich zu den beiden Stützrädern der einachsigen Konstruktion einsetzbaren Bodenabstützung versehen. Bereits damit wird erfindungsgemäß eine Verbesserung des Komforts, des Fahrverhaltens und der Lenkeigenschaften beim Rückwärtsfahren erreicht.

Ausgehend von der durch das vordere Zwischenglied und die beiden schwenkbaren Stützräder verbesserten Führungskonzept zeichnet sich der verbesserte Anhänger erfindungsgemäß nunmehr dadurch aus, dass an dessen Basis-Rahmen zusätzlich zumindest ein zu den Stützrädern versetzt angeordnetes Sicherungsrad als "intermittierende" Bodenabstützung vorgesehen wird. Dieses Sicherungsrad ist in Fahrt- bzw. Zugrichtung hinter der Ebene der Stützräder angeordnet, wobei eine in Richtung der Längsmittelebene mittige Anordnung besonders effektiv ist. Denkbar ist auch, dass mehrere dieser Sicherungsräder an dem Basis-Rahmen vorgesehen sind. Das bzw. die Sicherungsräder können auch eine außermittige Anordnung aufweisen.

Das Sicherungsrad ist dabei in Form einer in Gebrauchsstellung des Anhängers "mitgetragenen" Baugruppe ausgebildet, die in einer an die geometrischen Bedingungen des Anhängers angepassten und bezüglich des Bodenabstandes variablen Einbaulage an der Unterseite des Basis-Rahmens angeordnet wird. Aus dieser Position kann das Sicherungsrad insbesondere bei einer Schrägstellung des Anhängers in eine Stützposition abgesenkt werden. Dazu ist prinzipiell denkbar, das Sicherungsrad höhenverstellbar am Basis-Rahmen zu fixieren. Insbesondere ist das Sicherungsrad auch um eine Hochachse schwenkbar gehalten.

Eine optimale Ausführung wird dadurch erreicht, dass das ortsfeste und schwenkbare Sicherungsrad eine mit den Kupplungspunkten des vorderen Zwischengliedes bzw. der Kugelkopf-Kupplung korrespondierende Einbaulage aufweist. Dieses Konzept sieht vor, dass - ausgehend von den Schwenkmöglichkeiten im Bereich des vorderen Zwischengliedes - insbesondere eine bei Rückwärtsfahrt erreichte Schrägstellung des Anhängers "nach hinten" gesichert aufnehmbar ist. Es versteht sich, dass das Sicherungsrad in dieser "gekippten" Schrägstellung in eine Bodenauflage gelangt und damit eine verbesserte Führung und Abstützung des Anhängers bei der Rückwärtsfahrt erreicht wird.

Die konstruktive Gestaltung des Sicherungsrades in seiner Größe und betreffend die jeweiligen Halteteile ist weitgehend variabel. Vorgesehen sein kann dabei, dass das Sicherungsrad mit einer dessen Schwenkbewegung bremsenden Bremseinheit versehen ist. Ebenso ist die Anordnung unterschiedlicher Federelemente zur optimalen Abstützung des Systems denkbar.

Ausgehend von dieser das zusätzliche Sicherungsrad als Bodenabstützung aufweisenden Funktionseinheit ist vorgesehen, dass der das hintere Sicherungsrad aufweisende Basis-Rahmen zusätzlich mit einem an diesem um eine Hochachse kippbar gehaltenen Aufnahmeelement versehen wird. Dieses oberhalb des Basis-Rahmens gelegene und in Form einer Aufnahmeplatte ausgebildete Aufnahmeelement kann aus einer zum Basis-Rahmen parallelen Lage in eine Kippstellung so verlagert werden, dass zwischen dem Basis-Rahmen und der Aufnahmeplatte ein Winkel definiert ist. Dieser Winkel kann durch einen entsprechenden Anlagepunkt am Basis-Rahmen begrenzt werden. Dabei ist vorteilhaft vorgesehen, dass die Schwenkbarkeit der Aufnahmeplatte auf eine Kippung in oder entgegen der Fahrtrichtung begrenzt ist und seitliche Neigungen vermieden werden. Dazu ist vorgesehen, dass die Aufnahmeplatte gegen eine seitliche Kippung gesichert wird.

Die konstruktive Umsetzung dieser "kippbaren" Aufnahmeplatte sieht im Verbindungsbereich zum Basis-Rahmen eine zweckmäßige Abstützung in Form eines Kugelgelenkes vor.

Dieses Kugelgelenk ist dabei in Längsrichtung des Anhängers bzw. dessen Mittellängsebene so angeordnet, dass im Bereich zwischen der Hochachse des hinteren Stützrades und der durch die beiden Hochachsen der vorderen Stützräder gebildeten Querebene eine optimale Einbaulage vorgegeben wird.

Diese an jeweilige Anhänger unterschiedlicher Größe anpassbare Konstruktion des Aufnahmeelementes wird so ausgelegt, dass bei einer Rückwärtsfahrt des Anhängers die Kippung des Sicherungsrades um einen Winkel bis zur bodenseitigen Auflage erfolgen kann. Dabei ist das Zusammenwirken von Basis-Rahmen und Aufnahmeplatte so aufeinander abgestimmt, dass in dieser Rückwärtsfahr-Position die Aufnahmeplatte eine bodenparallele Lage beibehalten kann und damit ein besonders schonender Transport des oberhalb der Auflageplatte befindlichen Aufbaus, eines Verdecks o. dgl. Baugruppen möglich ist.

Eine vorteilhafte Weiterentwicklung des Anhängers im Bereich des "einfachen" Basis-Rahmens sieht vor, dass dieser im Bereich seines zum Zugfahrzeug gerichteten Zwischengliedes mit - zusätzlich zu den beiden seitlichen Kupplungspunkten - eine Wirkverbindung aufbauenden Längsverbindern versehen ist. Mit diesen Längsverbindern soll erreicht werden, dass der so verbesserte Anhänger denkbare "Nickbewegungen" ausgleichen kann. Damit wird auch bei in Fahrtrichtung auftretenden Schwingungen eine stabile Fahr-Bewegung des Systems gewährleistet.

In vorteilhafter Ausführung ist der Anhänger dabei mit zwei parallel zur Längsmittelebene verlaufenden Längsverbindern versehen. Diese sind im Bereich des Basis-Rahmens in jeweiligen - auch variabel einstellbaren - Gebrauchslagen so fixierbar, dass damit das Kupplungssystem zum Zugfahrzeug optimal angepasst ist. Dabei sind im Bereich eines am Zugfahrzeug das Gegenglied bildenden Trägers jeweilige Bauteile für unterschiedliche Fixierverbindungen denkbar. Insbesondere ist vorgesehen, dass diese lösbare Stützverbindung der Längsverbinder durch kraft- und/oder formschlüssig ineinandergreifende Bauteile realisiert wird. In vorteilhafter Ausführung ist eine entsprechende Steckverbindung so vorgesehen, dass mit geringem Aufwand beim Trennen des Anhängers vom Zugfahrzeug auch die Zwischenglieder aus ihrer Funktionslage gelöst werden können.

Eine kostengünstige Ausführung der Längsverbinder sieht vor, dass diese in weitgehend einstückiger Ausführung jeweils einen am Basis-Rahmen positionierbaren Tragschenkel und einen an einem Gegenglied im Bereich des Trägers anlegbaren Führungsschenkel aufweisen. Dabei kann der insbesondere vertikal ausgerichtete Führungsschenkel im Bereich des Gegengliedes in ein Profilteil eingreifen, so dass eine einfache Steckverbindung reaslisierbar ist. Im Bereich dieser Steckverbindung kann eine zusätzliche Anlageplatte vorgesehen sein, an der der Führungsschenkel lagestabil und reibschlüssig fixiert wird. Dazu können jeweilige zusätzliche Presselemente o. dgl. Teile zur Aussteifung des Systems genutzt werden.

Ausgehend von der Ausführung des Anhängers mit Stützrädern gemäß dem Oberbegriff des Anspruchs 1 ist vorgesehen, dass dieser - nur die Stützräder aufweisende - Anhänger im Bereich des die Kupplungspunkte bildenden Profilträgers mit den erfindungsgemäßen Längsverbindern versehen wird. Damit erfolgt unabhängig von weiteren Abstützungen des hinteren Anhängerbereiches an dessen vorderen Bereich eine zusätzliche Abstützung des Basis-Rahmens am Zugfahrzeug. Mit dieser Kupplungspunkte-Längsverbinder-Einheit wird eine Stützkonstruktion realisiert, die die Anwendung einer hinteren Bodenabstützung - beispielsweise in Form des zusätzlichen Stützrades - entbehrlich machen kann.

Weitere Einzelheiten und vorteilhafte Ausgestaltungen der Erfindung ergeben sich aus der nachfolgenden Beschreibung und der Zeichnung, die ein Ausführungsbeispiel des erfindungsgemäßen Anhängers näher veranschaulicht. In der Zeichnung zeigen:
- Fig. 1: eine Seitenansicht des erfindungsgemäßen einachsigen Anhängers mit einem zusätzlichen Sicherungsrad,
- Fig. 2: eine Seitenansicht ähnlich Fig. 1 mit einer Funktionslage des Sicherungsrades bei Rückwärtsfahrt des Anhängers,
- Fig. 3: eine Draufsicht des Anhängers gemäß Fig. 1,
- Fig. 4: eine Draufsicht des Anhängers ähnlich Fig. 3 mit Darstellung der unterhalb einer Aufnahmeplatte befindlichen Bauteile im Bereich des Basis-Rahmens bzw. der Räder,
- Fig. 5: eine Seitenansicht ähnlich Fig. 1 mit einer zusätzlichen Verbindung zwischen Basis-Rahmen und Zugfahrzeug,
- Fig. 6: eine Draufsicht des Anhängers mit den vorderseitig am BasisRahmen vorgesehenen Längsverbindern,
- Fig. 7: eine Perspektivdarstellung des Systems vor der Herstellung der Kupplungsverbindungen zum Zugfahrzeug,
- Fig. 8: eine Perspektivdarstellung ähnlich Fig. 7 mit den KupplungsBauteilen in Verbindungsposition, und
- Fig. 9: eine vergrößerte Darstellung des Systems im Bereich des zusätzlichen Längsverbinders zum Träger am Zugfahrzeug.

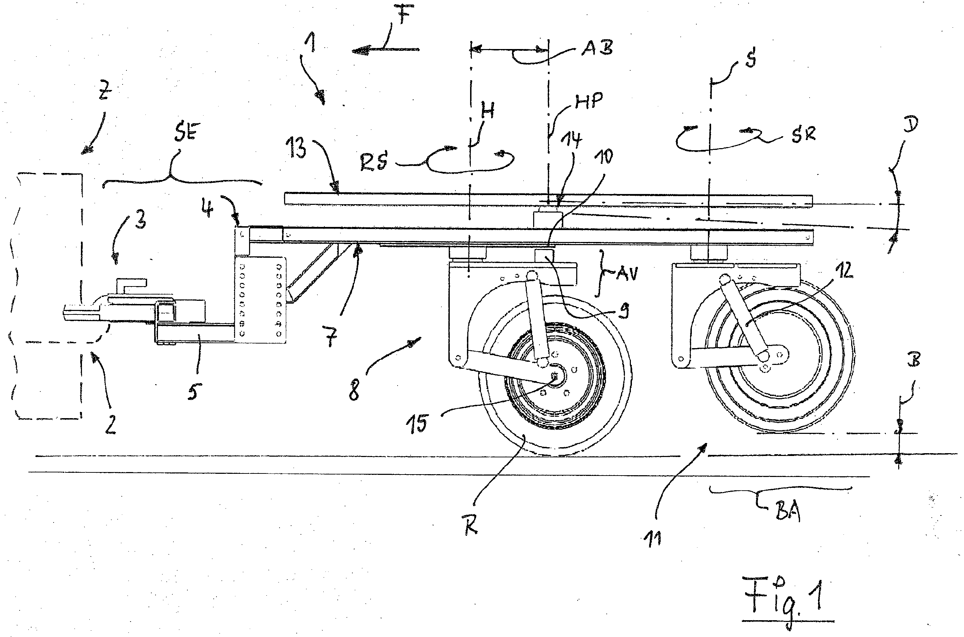

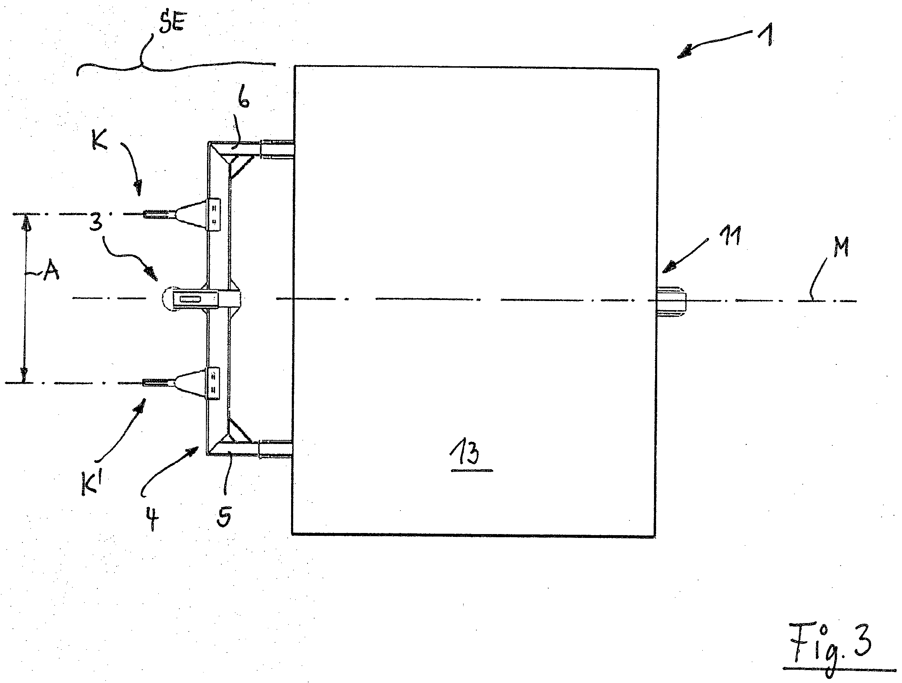

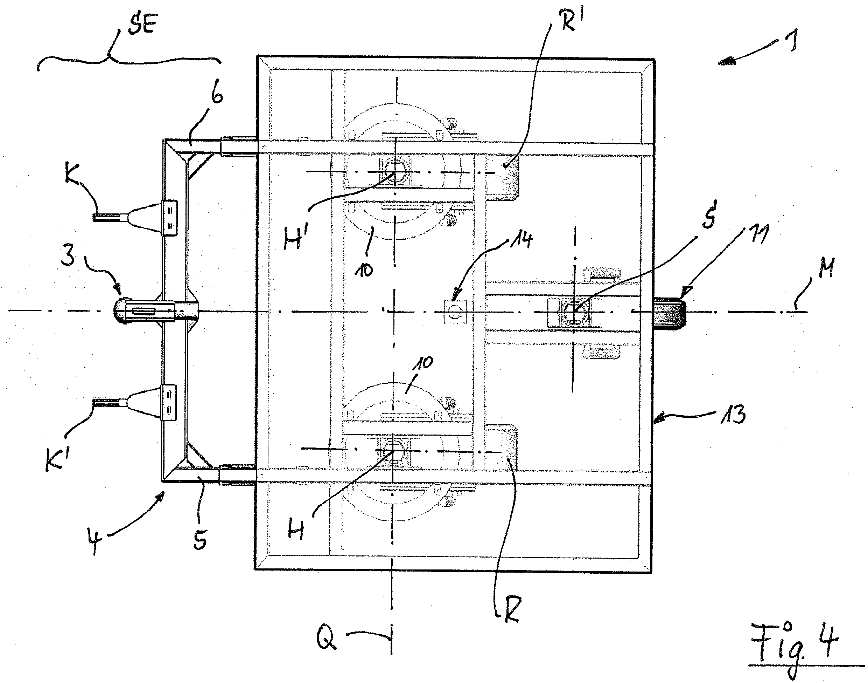

In Fig. 1 ist ein insgesamt mit 1 bezeichneter Anhänger für ein Zugfahrzeug Z dargestellt, wobei an dessen einen Kugelkopf 3 aufweisender Kugelkupplung 2 der Anhänger 1 mittels eines insgesamt mit SE bezeichneten Zwischengliedes festlegbar ist. Dieses Zwischenglied SE weist einen Profilträger 4 (Fig. 3) auf, der mit zwei parallelen Halteschenkeln 5, 6 zu einem insbesondere gestellartigen Basis-Rahmen 7 mit jeweiligen Längs- und Querträgern (durchsichtige Darstellung gemäß Fig. 4) geführt ist.

Die bekannte konstruktive Gestaltung derartiger Anhänger 1 (DE 20 2010 016 076; DE 20 2011 104 769) sieht vor, dass am Basis-Rahmen 7 vorzugsweise zwei Räder R, R' (Fig. 4) abgestützt sind, wobei diese mit jeweils einer eine Rollachse 15 vorgebenden Stützvorrichtung 8 versehen sind. Mit dieser Stützvorrichtung 8 werden jeweilige im Abstand AB zur Schwenkachse H, H' befindliche Anlageverbindungen definiert, so dass im Bereich des Basis-Rahmens 7 eine ein Anpressteil 9 und ein Gegenglied 10 aufweisende Bremse gebildet werden kann.

Das erfindungsgemäße Konzept sieht vor, dass der Anhänger 1 zusätzlich zu dem zumindest einen Stützrad R, R' zumindest eine zu diesem in Vorwärtsfahrtrichtung F längenversetzte Bodenabstützung AB aufweist. Diese ist vorzugsweise in Form eines Sicherungsrades 11 ausgebildet.

Eine effiziente Positionierung dieses zusätzlichen Sicherungsrades 11 wird dadurch erreicht, dass dieses in Fahrtrichtung F hinter dem Stützrad R, R' angeordnet wird. Dabei ist insbesondere eine in Richtung der Längsmittelebene M mittige Anordnung vorgesehen (Fig. 3, Fig. 4).

Aus der Seitenansicht gemäß Fig. 1 wird deutlich, dass das Sicherungsrad 11 in Einbaulage bzw. "Nichtgebrauchsstellung" einen Bodenabstand B definiert, so dass in dieser Fahrsituation F nur die vorderen Stützräder R, R' zur Abstützung des Systems genutzt werden.

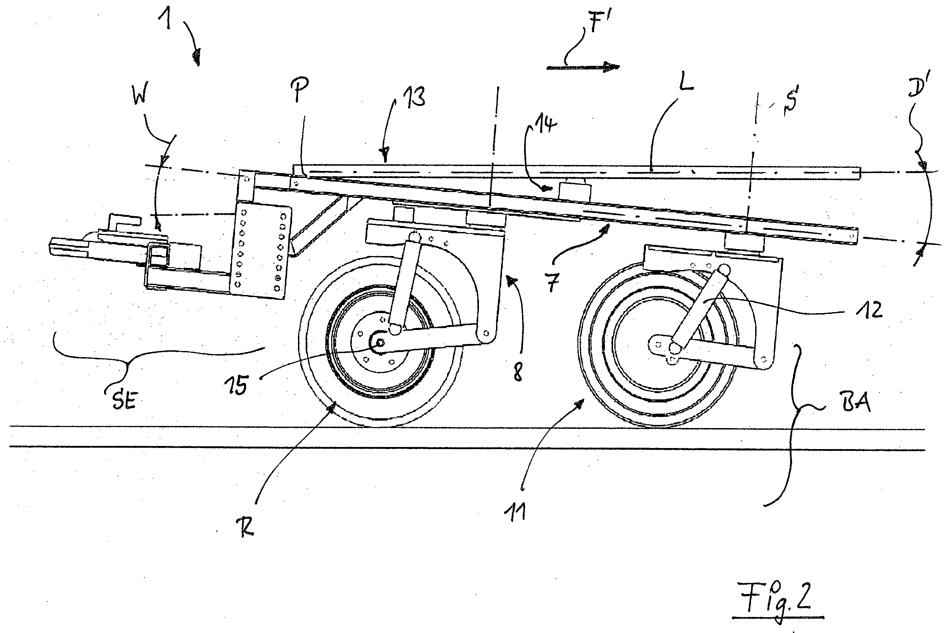

Eine geänderte Benutzungssituation des Sicherungsrades 11 ist in der Seitenansicht gemäß Fig. 2 dargestellt, wobei deutlich wird, dass das Sicherungsrad 11 bei einer Schrägstellung (Winkel W) des Anhängers bzw. des Basis-Rahmens 7 - beispielsweise bei einer Rückwärtsfahrt F' - in eine Stützposition absenkbar ist. Ebenso ist denkbar, dass das Sicherungsrad 11 auch eine höhenverstellbare Abstützung (nicht dargestellt) aufweisen kann, so dass bei dieser Halterung am Basis-Rahmen 7 die dargestellte Kippung gemäß Winkel D' (Fig. 2) auf ein besonders geringes Maß beschränkt werden kann.

Die vorteilhafte Ausführung des Systems sieht vor, dass das am Basis-Rahmen 7 ortsfest abgestützte Sicherungsrad 11 eine mit den Kupplungspunkten K, K' bzw. der Kugelkopf-Kupplung 2, 3 korrespondieren Einbaulage aufweist. Damit wird ein Sicherungskonzept realisiert, mit dem eine bei Rückwärtsfahrt gemäß Pfeilrichtung F' (Fig. 2) erreichte Schrägstellung (Winkel W) des Systems gesichert aufnehmbar ist. Aus dem Vergleich der jeweiligen Rad-Positionen in Fig. 1 und Fig. 2 wird deutlich, dass bei einem Wechsel von Vorwärtsfahrt (Pfeil F) auf Rückwärtsfahrt (Pfeil F', Fig. 2) auch eine jeweilige Schwenkbewegung der Stützräder R, R' (Pfeil RS) bzw. des Sicherungsrades 11 (Pfeil SR) erfolgt und in dieser Lage dann die "relative" Schrägstellung um den Winkel W möglich ist. Diese Umstellung auf die Rückwärtsfahr-Phase wird insbesondere durch die Konstruktion im Bereich des Zwischengliedes SE so gesteuert, dass die Manövrierfähigkeit des Anhängers 1 insgesamt verbessert ist und mit geringem Aufwand eine optimale Lenkung des Anhängers 1 möglich ist.

Aus den Darstellungen gemäß Fig. 1 bis Fig. 4 wird deutlich, dass das Sicherungsrad 11 um eine Hochachse S schwenkbar gehalten ist, wobei denkbar ist, dass diese Schwenkbewegung (Pfeil SR) des Sicherungsrades 11 ebenfalls durch eine nicht dargestellte Bremse beeinflussbar sein kann. Bei dem dargestellten System wird deutlich, dass das Sicherungsrad 11 mittels eines Federelementes 12 auch bei einer Rückwärtsfahrt effizient abstützbar ist.

Die konstruktive Erweiterung des vorbeschriebenen Systems mit dem das hintere Sicherungsrad 11 aufweisenden Basis-Rahmen 7 sieht vor, dass dieser zusätzlich mit einem an diesem um eine Hochachse HP kippbar bzw. schwenkbar gehaltenen Aufnahmeelement versehen wird. Dieses konstruktiv variabel ausführbare Aufnahmeelement ist dabei vorzugsweise als eine Aufnahmeplatte 13 ausgebildet.

Die strukturelle Gestaltung dieser Aufnahmeplatte 13 ist so ausgelegt, dass diese aus einer zum Basis-Rahmen 7 parallelen Lage (Fig. 1) in eine Kippstellung (Winkel D) verlagerbar ist. Es versteht sich, dass diese Kippung bzw. Schwenkung um den Winkel D durch einen am Basis-Rahmen 7 bewegten Anlagepunkt P begrenzbar ist (Fig. 2).

Bei einer Benutzung des Systems mit effizienter Gestaltung der Rückfahr-Situation (Fig. 2) ist vorgesehen, dass die Schwenkbarkeit der Aufnahmeplatte 13 auf eine Kippung in oder entgegen der Fahrtrichtung F begrenzt wird. Dabei ist insbesondere vorgesehen, dass die mit einem Pfeil D' in Fig. 2 veranschaulichte Kippung als eine Relativbewegung zwischen Aufnahmeplatte 13 und Basis-Rahmen 7 zu definieren ist. In jedem Falle ist vorgesehen, dass die Aufnahmeplatte 13 gegen seitliche Kippung gesichert werden kann.

Die effiziente Umsetzung dieses Kipp-Systems sieht vor, dass die Aufnahmeplatte 13 im Bereich eines Kugelgelenkes 14 mit dem Basis-Rahmen 7 verbunden wird.

Diese Form der Abstützung ist so ausgeführt, dass das Kugelgelenk 14 in Längsrichtung der Mittellängsebene M im Bereich zwischen der Hochachse S des Sicherungsrades 11 und der durch die beiden Hochachsen H, H' der vorderen Stützräder R, R' gebildeten Querebene Q angeordnet wird. Diese optimale Anordnung wird aus der Zusammenschau von Fig. 2 und Fig. 4 deutlich.

In der Benutzungssituation des Anhängers 1 kann bei einer Rückwärtsfahrt gemäß Pfeilrichtung F' die Kippung des Sicherungsrades 11 um den Winkel D' relativ zur Aufnahmeplatte 13 erfolgen, wobei gleichzeitig der Basis-Rahmen 7 - in Bezug auf die Bauteile des vorderen Zwischengliedes SE - um einen Winkel W (Fig. 2) hochgeschwenkt wird. In dieser Phase der Rückwärtsfahrt F' ist dann die bodenseitige Auflage des Sicherungsrades 11 erreicht, und gleichzeitig nimmt die Aufnahmeplatte 13 eine bodenparallele Lage gemäß Ebene L so ein, dass die auf der Aufnahmeplatte 13 befindlichen Nutzobjekte in der Rückwärtsfahrsituation weitgehend unbeeinflusst sind.

Mit dem vorbeschriebenen Konzept des zusätzlichen Stützrades 11 und dessen Kombination mit einer zusätzlichen schwenk- bzw. kippbaren Aufnahmeplatte 13 wird ein Anhänger-Konzept realisiert, dessen Manövrierfähigkeit so optimierbar ist, dass auch unter schwierigen Einfahrbedingungen, beispielsweise beim Einparken, eine vergleichsweise einfache Handhabung möglich wird. Dies betrifft insbesondere Einsatzsituationen des Anhängers 1 in Form eines Zusatzaggregates für Wohnmobile o. dgl. großräumige Fahrzeuge, die schon grundsätzlich hohe Anforderungen an das Lenk- und Steuervermögen der Verkehrsteilnehmer stellen. Besonders bewährt hat sich die Anwendung des erfindungsgemäßen Konzeptes mit Blick darauf, dass Camping- und Wohnanhänger als Zugfahrzeuge Z oft unter beengten Bedingungen auf Campingplätzen o. dgl. Aufstellorten zu bedienen sind und nunmehr eine deutliche Komfortverbesserung mit dem einfachen "Lenk-Stütz-System" erfindungsgemäßer Ausführung erreicht ist.

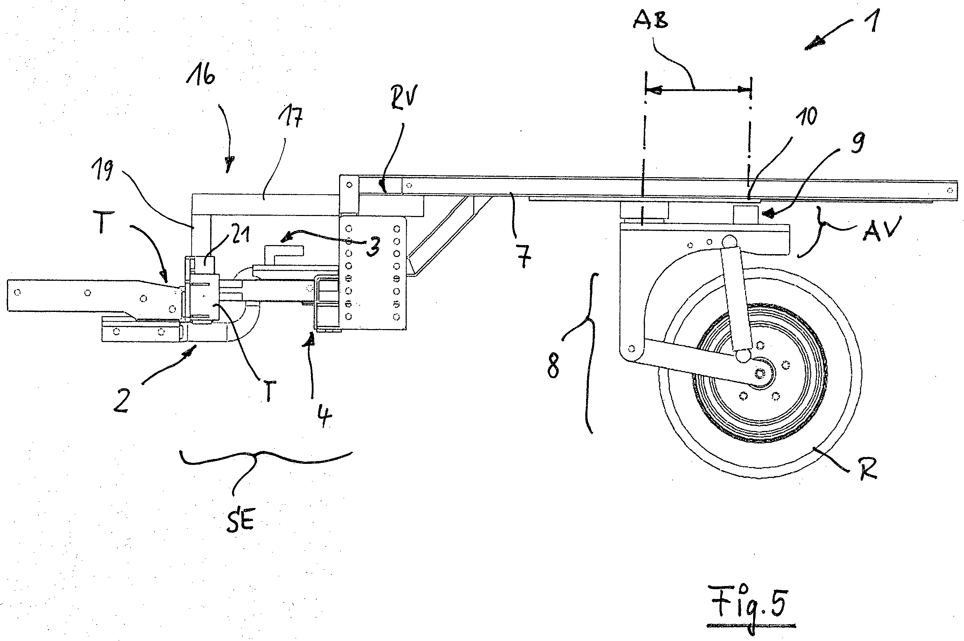

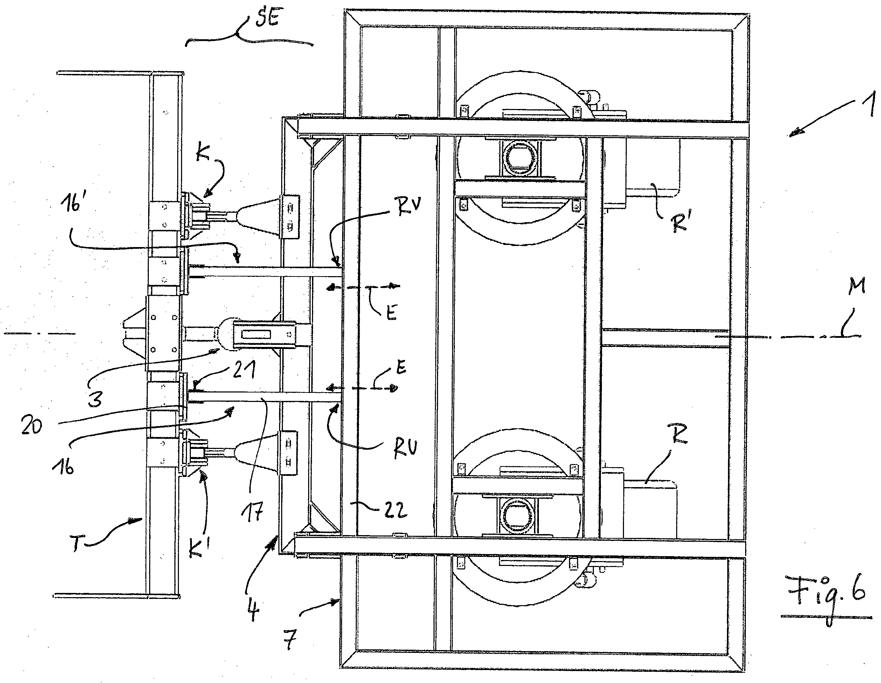

In Fig. 5 bis 9 ist eine zweite Ausführung eines nur die beiden Stützräder R, R' aufweisenden Anhängers 1 dargestellt. Dieser ist im Bereich seiner Kupplungspunkte K, K' (Fig. 6) mit jeweiligen eine zusätzliche Abstützung des Basis-Rahmens 7 am Träger T bewirkenden Längsverbindern 16, 16' versehen. Denkbar ist auch diese Anordnung mit nur einem der Längsverbinder 16, 16' auszuführen (nicht dargestellt). Das Längsverbinder-System ist so auslegbar, dass dessen Anwendung auch im Bereich eines Basis-Rahmens 7 mit dem hinteren Sicherungsrad 11 (Fig. 1) denkbar ist.

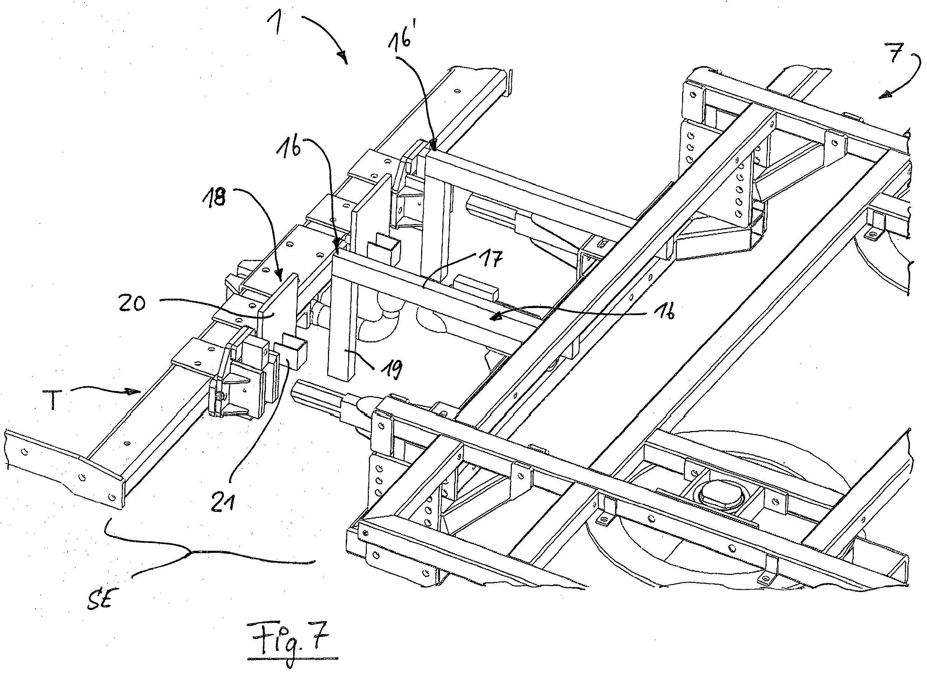

In jedem Falle ist vorgesehen, dass die Längsverbinder 16, 16' im Bereich des zum Zugfahrzeug Z gerichteten Zwischengliedes SE eine zusätzliche Verbindung realisieren. Ein bei Fahrbewegung ausgleichend wirkendes System wird dadurch gebildet, dass der Anhänger die zwei parallel zur Längsmittelebene M verlaufenden Längsverbinder 16, 16' (Fig. 6, Fig. 7) aufweist.

Das Konzept der Verbindungsstruktur mit Längsverbindern 16 sieht vor, dass diese im Bereich des Basis-Rahmens 7 in variabel einstellbaren Gebrauchslagen fixierbar sein können. Dazu kann der Längsverbinder 16 im Bereich der jeweiligen Rahmenverbindung RV mit jeweiligen Verbindungsmitteln (nicht näher dargestellt) versehen sein, die eine variable Positionierung in Pfeilrichtung E ermöglichen. In vorteilhafter Ausführung ist vorgesehen, dass der Längsverbinder 16 im Bereich einer Rahmenstrebe 22 durch eine Schweißverbindung fixiert werden kann.

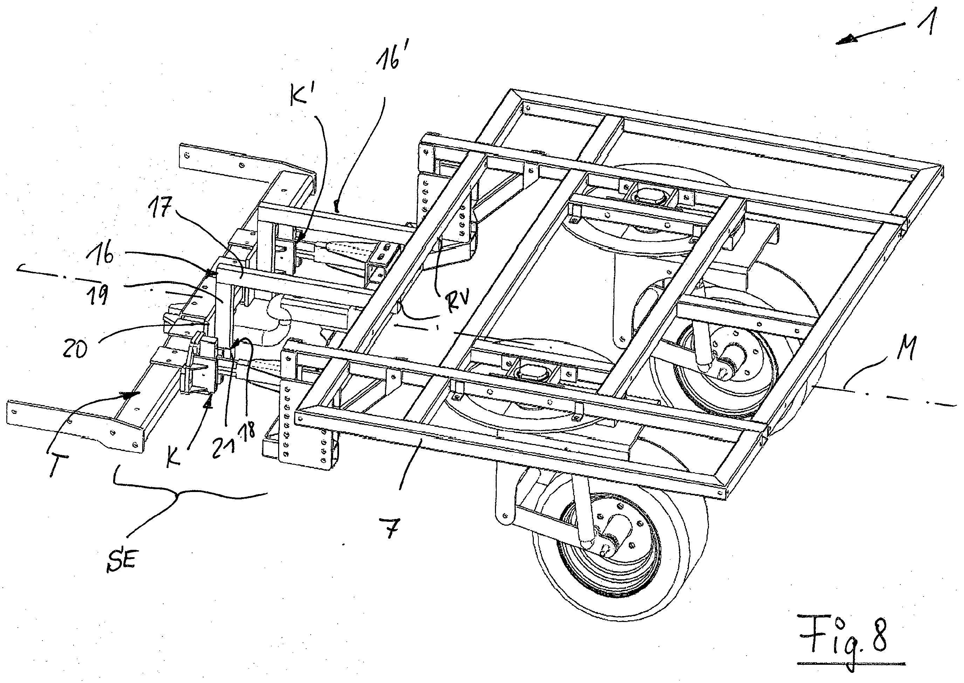

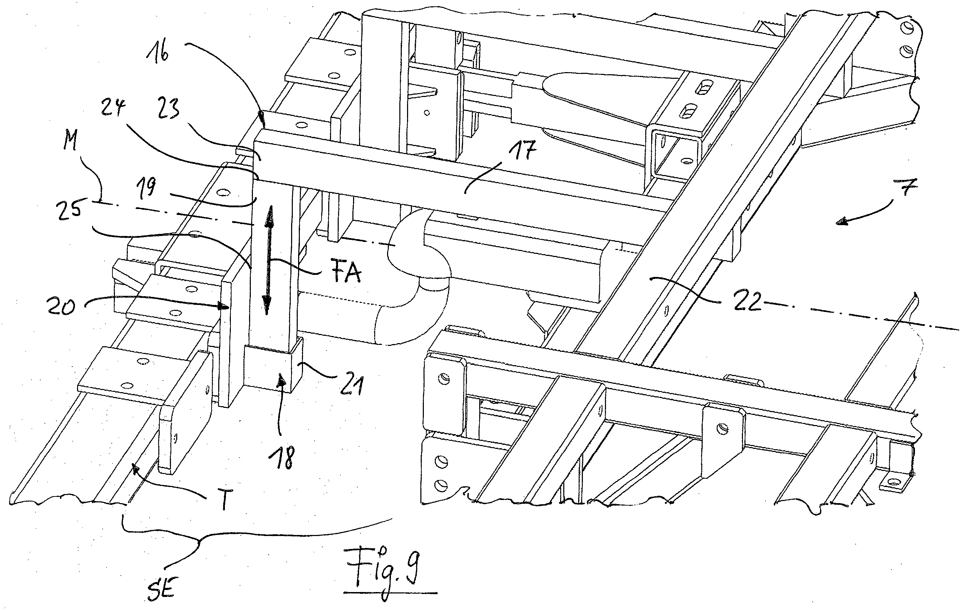

Aus der Zusammenschau von Fig. 7 und Fig. 8 wird deutlich, dass der jeweilige Längsverbinder 16 bei Verlagerung der Systemteile in die Verbindungslage insbesondere in einer Pfeilrichtung FA (Fig. 9) bewegt werden kann. Damit kann zu dem Träger T am Zugfahrzeug Z hin eine kraft- und/oder formschlüssige Verbindung aufgebaut werden (Nutzposition gemäß Fig. 8).

Für diese Verbindungskonstruktion ist der jeweilige Längsverbinder 16, 16' jeweils mit einem am Basis-Rahmen 7 positionierbaren Tragschenkel 17 und einem an einem Gegenglied 18 im Bereich des Trägers T anlegbaren Führungsschenkel 19 versehen. Der im Rahmenteil 22 gehaltene Tragschenkel 17 verläuft dabei im Wesentlichen horizontal und ist an seinem vorderen Ende 23 (Fig. 9) mit dem Führungsschenkel 19 verbunden. Die dabei vorgesehene Verbindungszone 24 kann dabei als eine stoffschlüssige Schweißverbindung ausgeführt sein. Denkbar ist jedoch auch, dass hier eine schenk- und/oder klappbare formschlüssige Verbindung - mit einem entsprechenden Sicherungsglied (nicht dargestellt) - vorgesehen wird.

Aus der dargestellten Ausführung des Verbindungskonzepts für die Längsverbinder 16, 16' ergibt sich, dass deren Führungsschenkel 19 im Bereich des Gegengliedes 18 vorzugsweise mittels einer Steckverbindung (Pfeil FA) in einem Profilteil 21 fixiert werden kann. Dabei ist in zweckmäßiger Ausführung vorgesehen, dass die Stirnseite 25 des Führungsschenkels 19 an einer Anlageplatte 20 so fixierbar ist, dass eine zumindest reibschlüssige Abstützung des Längsverbinders 16 erreicht wird. Denkbar ist auch im Bereich dieser Gegenglied-Führungsschenkel-Einheit ein zusätzliches Klemm-, Steck- und/oder Pressglied (nicht dargestellt) vorzusehen.

In der dargestellten Ausführung sind die Längsverbinder 16. 16' jeweils als Vierkant-Profile ausgeführt. Denkbar ist auch, dass die Längsverbinder 16, 16' jeweils als rohrförmige Teile ausgeführt sind oder ein Mehrkantprofil vorgesehen wird (jeweils nicht dargestellt).

## Patentansprüche

1. Einachsiger Anhänger für einen Kraftwagen o. dgl. Zugfahrzeug (Z), das zumindest einen Kugelkopf (2) mit Kugelkupplung (3) als zumindest eine Verbindungsbaugruppe aufweist, an der der Anhänger (1) mittels eines Zwischengliedes (SE) festlegbar ist und dieses zusätzlich zwei beidseits der Längsmittelebene (M) des Anhängers (1) in einem Querabstand (A) voneinander angeordnete Kupplungspunkte (K, K') aufweist, wobei als Zwischenglied (SE) ein einerseits mit zwei parallelen Halteschenkeln (5, 6) zum Basis-Rahmen (7) des Anhängers (1) geführter und andererseits die beiden Kupplungspunkte (K, K') bildender Profilträger (4) vorgesehen ist, der Anhänger (1) im Bereich seines Basis-Rahmens (7) zumindest eine ein Stützrad (R, R') aufnehmende und um eine vertikale Schwenkachse (H, H') verlagerbare Stützvorrichtung (8) aufweist und diese Stützvorrichtung (8) im Abstand (AB) zur ein Stützlager definierenden Schwenkachse (H, H') zumindest eine im Bereich eines Anpressteils (9) sowie Gegengliedes (10) mit dem Basis-Rahmen (7) zusammenwirkende Anlageverbindung (AV) aufweist, wobei der Anhänger (1) zusätzlich zu dem zumindest einen Stützrad (R, R') zumindest eine zu diesem versetzt angeordnete Bodenabstützung (BA) aufweist, wobei die zusätzliche Bodenabstützung (BA) von zumindest einem Sicherungsrad (11) gebildet wird, **dadurch gekennzeichnet, dass** das Sicherungsrad (11) derart gebildet wird, dass damit ein Sicherungskonzept realisierbar wird, mit dem eine bei Rückwärtsfahrt (Pfeil F') erreichte Schrägstellung des Anhängers (1) gesichert aufnehmbar ist, indem das Sicherungsrad (11) in dieser gekippten Schrägstellung in eine Bodenauflage gelangt.

2. Anhänger nach Anspruch 1, **dadurch gekennzeichnet, dass** das Sicherungsrad (11) in Fahrtrichtung (F) hinter dem Stützrad (R, R') und in Richtung der Längsmittelebene (M) mittig angeordnet ist.

3. Anhänger nach einem der Ansprüche 1 oder 2, **dadurch gekennzeichnet, dass** das Sicherungsrad (11) in der zum Fahrbetrieb (Pfeil F) vorgesehenen Einbaulage einen Bodenabstand (B) definiert und bei einer Schrägstellung (Winkel W) des Anhängers (1) in eine Stützposition absenkbar ist.

4. Anhänger nach einem der Ansprüche 1 bis 3, **dadurch gekennzeichnet, dass** das Sicherungsrad (11) um eine Hochachse schwenkbar mit dem Basis-Rahmen (7) verbunden und dabei die um eine vertikale Stützachse (S) mögliche Schwenkbewegung (Pfeil SR) des Sicherungsrades (11) bremsbar ist.

5. Anhänger nach einem der Ansprüche 1 bis 4, **dadurch gekennzeichnet, dass** das Sicherungsrad (11) höhenverstellbar am Basis-Rahmen (7) gehalten ist.

6. Anhänger nach einem der Ansprüche 1 bis 5, **dadurch gekennzeichnet, dass** das Sicherungsrad (11) eine mit den Kupplungspunkten (K, K') bzw. der Kugelkopf-Kupplung (2, 3) korrespondierende Einbaulage aufweist, derart, dass die bei Rückwärtsfahrt (F') erreichte Schrägstellung (Winkel W) gesichert aufnehmbar ist.

7. Anhänger nach einem der Ansprüche 1 bis 6, **dadurch gekennzeichnet, dass** das Sicherungsrad (11) mittels eines Federelementes (12) abstützbar ist.

8. Anhänger nach einem der Ansprüche 1 bis 7, **dadurch gekennzeichnet, dass** der Basis-Rahmen (7) im Bereich des vorderseitig vorgesehenen Zwischengliedes (SE) mit zumindest einem zusätzlich zum Verbindungsbereich am Zugfahrzeug (Z) gerichteten Längsverbinder (16) versehen ist.

9. Anhänger nach Anspruch 8, **dadurch gekennzeichnet, dass** dieser mit zwei parallel zur Längsmittelebene (M) verlaufenden Längsverbindern (16, 16') versehen ist.

10. Anhänger nach Anspruch 8 oder 9, **dadurch gekennzeichnet, dass** der/die Längsverbinder (16, 16') im Bereich des Basis-Rahmens (7) in variabel einstellbaren Gebrauchslagen fixierbar ist und andererseits zu einem Träger (T) am Zugfahrzeug (Z) hin eine aus einer kraft- und/oder formschlüssigen Verbindung lösbare Abstützung vorgesehen ist.

11. Anhänger nach einem der Ansprüche 8 bis 10, **dadurch gekennzeichnet, dass** der Längsverbinder (16, 16') jeweils einen am Basis-Rahmen (7) positionierbaren Tragschenkel (17) und einen an einem Gegenglied (18) im Bereich des Trägers (T) anlegbaren Führungsschenkel (19) aufweist.

12. Anhänger nach einem der Ansprüche 8 bis 11, **dadurch gekennzeichnet, dass** der Führungsschenkel (19) im Bereich des Gegengliedes (18) mittels einer Steckverbinder in einem Profilteil (21) festlegbar ist und dabei zu einer Anlageplatte (20) hin eine zumindest reibschlüssige Pressanlage gebildet ist.

## Claims

1. Single-axle trailer for a motor vehicle or a similar tow vehicle (Z) that comprises at least one trailer ball (2), having a ball coupling (3), as at least one connection assembly to which the trailer (1) can be fastened by means of an intermediate link (SE), said link additionally comprising two coupling points (K, K') arranged on either side of the longitudinal centre plane (M) of the trailer (1) and at a transverse distance (A) from one another, a profiled beam (4), two parallel retaining arms (5, 6) of which are guided to the base frame (7) of the trailer (1) and which beam also forms the two coupling points (K, K'), being provided as the intermediate link (SE), the trailer (1) comprising, in the region of the base frame (7) thereof, at least one support device (8) which receives at least one support wheel (R, R') and can be moved about a vertical pivot axis (H, H'), said support device (8) comprising, at a distance (AB) from a pivot axis (H, H') that defines a support bearing, at least one bearing connection (AV) that interacts with the base frame (7) in the region of a contact part (9) and of a mating member (10), the trailer (1) comprising, in addition to the at least one support wheel (R. R'), at least one ground support (BA) that is arranged so as to be offset from said support wheel, said additional ground support (BA) being formed by at least one securing wheel (11), **characterised in that** the securing wheel (11) is formed such that it can be used to implement a securing concept by means of which an inclined position of the trailer (1), which is reached in the event of reversing (arrow F'), can be securely received by means of the securing wheel (11) reaching a ground bearing surface in said tilted inclined position.

2. Trailer according to claim 1, **characterised in that** the securing wheel (11) is arranged behind the support wheel (R, R') in the direction of travel (F), and is arranged centrally in the direction of the longitudinal centre plane (M).

3. Trailer according to either claim 1 or claim 2, **characterised in that** the securing wheel (11) defines a distance (B) from the ground when in the installed position provided for driving mode (arrow F), and can be lowered into a support position when the trailer (1) is in an inclined position (angle W).

4. Trailer according to any of claims 1 to 3, **characterised in that** the securing wheel (11) is connected to the base frame (7) so as to be pivotable about a vertical axis, and the possible pivoting movement (arrow SR) of the securing wheel (11) about a vertical support axis (S) can thus be braked.

5. Trailer according to any of claims 1 to 4, **characterised in that** the securing wheel (11) is retained on the base frame (7) so as to be height-adjustable.

6. Trailer according to any of claims 1 to 5, **characterised in that** the installation position of the securing wheel (11) corresponds to the coupling points (K, K') or to the trailer ball coupling (2, 3), such that the inclined position (angle W), reached in the event of reversing (F'), can be securely received.

7. Trailer according to any of claims 1 to 6, **characterised in that** the securing wheel (11) can be supported by means of a spring element (12).

8. Trailer according to any of claims 1 to 7, **characterised in that**, in the region of the intermediate link (SE) provided on the front side, the base frame (7) is provided with at least one additional longitudinal connector (16) that faces the connection region on the tow car (Z).

9. Trailer according to claim 8, **characterised in that** it is provided with two longitudinal connectors (16, 16') that extend in parallel with the longitudinal centre plane (M).

10. Trailer according to either claim 8 or claim 9, **characterised in that** the longitudinal connector or longitudinal connectors (16, 16') can be fixed in the region of the base frame (7) in variably adjustable use positions, and is also supported, so as to be releasable from a non-positive and/or positive connection, on a carrier (T) on the tow car (Z).

11. Trailer according to any of claims 8 to 10, **characterised in that** the longitudinal connector (16, 16') in each case comprises a carrier arm (17) that can be positioned on the base frame (7), and a guide arm (19), which can rest on a mating member (18) in the region of the carrier (T).

12. Trailer according to any of claims 8 to 11, **characterised in that** the guide arm (19) can be fastened, in the region of the mating member (18), in a profile part (21) by means of a plug-in connector, and at least frictional pressing contact on a support plate (20) is achieved in the process.

## Revendications

1. Remorque à un essieu destiné à un véhicule ou un véhicule de remorquage analogue (Z) qui comprend au moins une tête sphérique (2) pourvue d'un accouplement à rotule (3) en tant qu'au moins un module de raccordement auquel la remorque (1) peut être fixée au moyen d'un élément intermédiaire (SE) et celui-ci comporte en plus deux points d'accouplement (K, K') disposés à une distance transversale (A) l'un de l'autre de chaque côté du plan médian longitudinal (M) de la remorque (1),
l'élément intermédiaire (SE) prévu étant un support profilé (4) qui est guidé d'une part avec deux branches de retenue parallèles (5, 6) par rapport au cadre de base de la remorque et qui forme d'autre part les deux points d'accouplement (K, K'), la remorque (1) comportant au niveau de son cadre de base (7) au moins un dispositif de support (8) recevant une roue de support (R, R') et pouvant se déplacer autour d'un axe de pivotement vertical (H, H') et ce dispositif de support (8) à la distance (AB) de l'axe de pivotement (H, H') définissant un palier de support au moins une liaison de montage (AV) coopérant au niveau d'un élément de pression (9) d'un élément homologue (10) avec le cadre de base (7), la remorque (1) comportant en plus de l'au moins une roue de support (R, R') au moins un support au sol (BA) décalé de cette roue de support, le support au sol supplémentaire (BA) étant formé par au moins une roue de sécurité (11), **caractérisée en ce que** la roue de sécurité (11) est formée de telle sorte qu'un concept de sécurité peut ainsi être réalisé au moyen duquel une position inclinée de la remorque (1), atteinte en marche arrière (flèche F'), peut être prise de façon sécurisée **en ce que**, dans cette position inclinée basculée, la roue de sécurité (11) parvient en appui sur le sol.

2. Remorque selon la revendication 1, **caractérisée en ce que** la roue de sécurité (11) est disposée, par référence à la direction de déplacement (F), en arrière la roue de support (R, R') et est disposée au centre par référence à la direction du plan médian longitudinal (M).

3. Remorque selon l'une des revendications 1 ou 2, **caractérisée en ce que**, dans la position de montage prévue pour le roulement (flèche F), la roue de sécurité (11) définit une distance au sol (B) et peut être abaissée dans une position de support lorsque la remorque (1) est dans une position inclinée (angle W).

4. Remorque selon l'une des revendications 1 à 3, **caractérisée en ce que** la roue de sécurité (11) est reliée au châssis de base (7) de manière pivotante sur un axe vertical et le mouvement de pivotement (flèche SR), possible sur un axe de support vertical (S), de la roue de sécurité (11) peut être freiné.

5. Remorque selon l'une des revendications 1 à 4, **caractérisée en ce que** la roue de sécurité (11) est maintenue de manière réglable en hauteur au niveau du cadre de base (7) .

6. Remorque selon l'une des revendications 1 à 5, **caractérisée en ce que** la roue de sécurité (11) possède une position de montage correspondant aux points d'accouplement (K, K') ou à l'accouplement à tête sphérique (2, 3) de sorte que la position inclinée (angle W) atteinte en marche arrière (F') peut être prise de manière sécurisée.

7. Remorque selon l'une des revendications 1 à 6, **caractérisée en ce que** la roue de sécurité (11) peut être supportée au moyen d'un élément à ressort (12).

8. Remorque selon l'une des revendications 1 à 7, **caractérisée en ce que** le cadre de base (7) est pourvu, au niveau de l'élément intermédiaire (SE), prévu du côté avant, d'au moins un élément de raccordement longitudinal (16) orienté en plus vers la zone de raccordement du véhicule de remorquage (Z).

9. Remorque selon la revendication 8, **caractérisée en ce qu'**elle pourvue de deux éléments de raccordement longitudinaux (16, 16') parallèles au plan médian longitudinal (M).

10. Remorque selon la revendication 8 ou 9, **caractérisée en ce que** l'au moins un élément de raccordement longitudinal (16, 16') peut être fixé au niveau du cadre de base (7) dans des positions d'utilisation à réglage variable et d'autre part un appui détachable d'une liaison en force et/ou par complémentarité de formes est prévu en direction d'un support (T) au niveau du véhicule de remorquage (Z).

11. Remorque selon l'une des revendications 8 à 10, **caractérisée en ce que** l'élément de raccordement longitudinal (16, 16') comporte à chaque fois une branche porteuse positionnable au niveau du châssis de base (7) et une branche de guidage (19) pouvant venir en appui sur un élément antagoniste (18) au niveau du support T).

12. Remorque selon l'une des revendications 8 à 11, **caractérisée en ce que** la branche de guidage (19) peut être fixée dans une partie profilée (21) au moyen d'un connecteur enfichable au niveau de l'élément antagoniste (18) et un montage par pression au moins à friction est formée en direction d'une plaque de montage (20).
